# FASCICULE DE BREVET EUROPEEN

(11) **EP 0 983 891 B1**
(45) Date de publication et mention de la délivrance du brevet: **23.07.2003**
(21) Numéro de dépôt: 99402153.3
(22) Date de dépôt: 31.08.1999
(51) Int. Cl.: B60J 10/04, B60J 10/00

(54) **Coulisse pour portière automobile et son procédé de mise en place, notamment parcintrage differentiel**
Führungskulisse für ein Kraftfahrzeug und Verfahren zur Positionierung, insbesondere durch differentielles Biegen
Guiding groove for a motor vehicle and its method for positioning, especially by differential bending

(30) Priorité: 03.09.1998 FR 9811033
(43) Date de publication de la demande: 08.03.2000
(73) Titulaire: HUTCHINSON, 75008 Paris (FR)
(72) Inventeur: Tessier, Bernard, 45120 Chalette sur Loing (FR)
(74) Mandataire: Jacquard, Philippe Jean-Luc

(56) Documents cités:
- EP-A- 0 267 073
- EP-A- 0 684 158
- WO-A-98/35847
- US-A- 4 908 989
- US-A- 5 557 890

## Description

La présente invention a pour objet une coulisse pour portière automobile selon le préambule de la revendication n° 6 et son procédé de mise en place selon le préambule de la revendication n°1. Une coulisse de cette sorte est révélée par EP 0684158A.

L'invention concerne en particulier les coulisses en EPDM ou TPE comportant de préférence une armature, notamment les coulisses qui doivent, pour des raisons de style ou d'architecture automobile, assurer l'étanchéité, à la fois d'une vitre mobile descendante, côte à côte avec une vitre fixe (généralement triangulaire, appelée custode), la séparation des deux vitres (mobile et fixe) étant matérialisée par un montant en "U" ou en "H" appelé dormant ou montant de vitre fixe.

Lorsqu'il est nécessaire d'associer une vitre mobile avec une custode fixe, il est très délicat d'assurer à la fois une continuité esthétique du côté extérieur du véhicule et une continuité acoustique du côté intérieur du véhicule.

En effet, deux grands cas de figure se rencontrent :
- dans le premier cas, la coulisse longe parallèlement le cadre serti de la porte (cas par exemple de la porte avant du Renault "Scénic") et la jonction en haut du dormant n'est pas très esthétique à l'extérieur du véhicule, car le profil qui recouvre le dormant arrive en zone haute en proximité bord à bord avec la coulisse, mais surtout l'étanchéité acoustique à l'intérieur du véhicule dans la zone haute du dormant n'est pas facile à assurer, en raison de la discontinuité des lèvres d'appui.
- dans le deuxième cas, la coulisse tourne en haut du dormant et descend le long de ce dernier, et l'étanchéité de la vitre fixe est alors assurée par une pièce en caoutchouc indépendante, qui est soit chaussée, soit surmoulée. Cette solution est acoustiquement acceptable, mais elle est de moins en moins tolérée esthétiquement parlant.

La présente invention a pour objet de remédier au moins partiellement aux inconvénients ci-dessus.

L'idée de base de l'invention est d'y parvenir en dissociant localement les fonctions acoustique et esthétique pour permettre l'obtention du résultat recherché.

L'invention concerne ainsi un procédé de pose d'une coulisse, notamment d'une coulisse armée, sur une portière d'un véhicule automobile présentant un cadre de porte, ladite coulisse présentant une région de montage sur un support tel qu'une feuillure et une région d'étanchéité, comportant au moins deux lèvres d'étanchéité opposées, la région de montage et la région d'étanchéité présentant une région de paroi commune qui porte au moins une dite lèvre d'étanchéité, et la région d'étanchéité présentant une région de paroi externe formant habillage externe de la coulisse, caractérisé en ce que la portière présente une vitre fixe (73) et une vitre mobile (74) séparées par un dormant fixe (40), et en ce qu'il met en oeuvre :
- une séparation longitudinale de la coulisse sur une partie de sa longueur en un brin externe qui présente au moins ladite région de paroi externe et un brin interne qui présente au moins ladite région de montage et ladite lèvre d'étanchéité portée par ladite paroi commune, de sorte que la coulisse présente une région non séparée où elle est constituée d'un brin principal et à partir d'un point de séparation une région séparée dans laquelle le brin principal est divisé selon une ligne de découpe longitudinale pour former le brin interne et le brin externe ;
- un montage du brin principal sur le cadre de porte jusqu'à ce que le point de séparation vienne au droit du donnant ;
- un montage du brin externe et du brin interne respectivement sur le cadre de porte au-delà dudit point de séparation, et le long du dormant.

Ceci permet à la fois d'obtenir une étanchéité acoustique à l'intérieur du véhicule dans la zone haut du dormant tout en supprimant l'inconvénient esthétique de la pièce en caoutchouc indépendante, qui est présente dans le deuxième cas mentionné ci-dessus.

En outre, la séparation longitudinale de la coulisse en deux demi-coulisses constituées par le brin externe et le brin interne induit une dissociation des fibres neutres qui est favorable à leur cintrage. En particulier, le procédé met avantageusement en oeuvre un cintrage différentiel du brin externe et de brin interne.

Le dormant peut être habillé à l'aide d'un profilé d'habillage.

De plus, ce procédé se prête également à l'élimination du défaut esthétique en haut du dormant grâce à une articulation du profilé d'habillage à la région de paroi externe.

Le profilé d'habillage peut également présenter au moins une lèvre d'étanchéité venant à l'opposé d'au moins une dite lèvre d'étanchéité portée par la paroi commune.

L'invention concerne également une coulisse pour portière de véhicule présentant une région de montage sur un support tel qu'un feuillure et une région d'étanchéité, comportant au moins deux lèvres d'étanchéité opposées, la région de montage et la région d'étanchéité présentant une région de paroi commune qui porte au moins une dite lèvre d'étanchéité, et la région d'étanchéité présentant une région de paroi externe formant habillage externe de la coulisse, caractérisée en ce qu'elle présente une région non séparée où elle est constituée d'un brin principal et, à partir d'un point de séparation, une région séparée longitudinalement dans laquelle le brin principal est divisé selon une ligne de découpe longitudinale en un brin externe qui présente au moins ladite région de paroi externe, et un brin interne qui présente ladite région de montage et ladite lèvre d'étanchéité portée par ladite paroi commune.

La coulisse peut présenter un profilé d'habillage externe, de préférence articulé à la région de paroi externe.

Afin de compléter l'étanchéité côté vitre mobile, le profilé d'habillage peut présenter au moins une lèvre d'étanchéité venant, lorsque le profilé d'habillage est parallèle au brin interne, à l'opposé d'une dite lèvre d'étanchéité portée par la paroi commune.

Le profilé d'habillage peut présenter en coupe un profil en harpon permettant un encliquetage dans une rainure complémentaire du dormant.

De manière à faciliter la découpe, et éventuellement à renforcer la demi-coulisse externe après découpe dans le cas où elle est armée, la coulisse présente avantageusement un épaulement situé au voisinage de la ligne de découpe longitudinale.

D'autres caractéristiques et avantages de l'invention apparaîtront mieux à la lecture de la description qui va suivre, donnée à titre d'exemple non limitatif, en liaison avec les dessins ci-annexés, dans lesquels :
- la Figure 1 représente le profil d'une coulisse selon un mode de réalisation préféré de l'invention.
- la Figure 2 illustre la pose des brins de la coulisse selon l'invention, avec des détails des profils suivant AA, BB, CC et DD.
- la Figure 3 est une vue en perspective avec coupe horizontale illustrant le montage sur le dormant.
- la Figure 4 illustre un sous-ensemble associant une vitre fixe et un dormant avec des détails en coupe EE et FF.
- et la Figure Sa et 5b montrent l'aspect de l'ensemble une fois monté, respectivement côté intérieur et côté extérieur du véhicule.

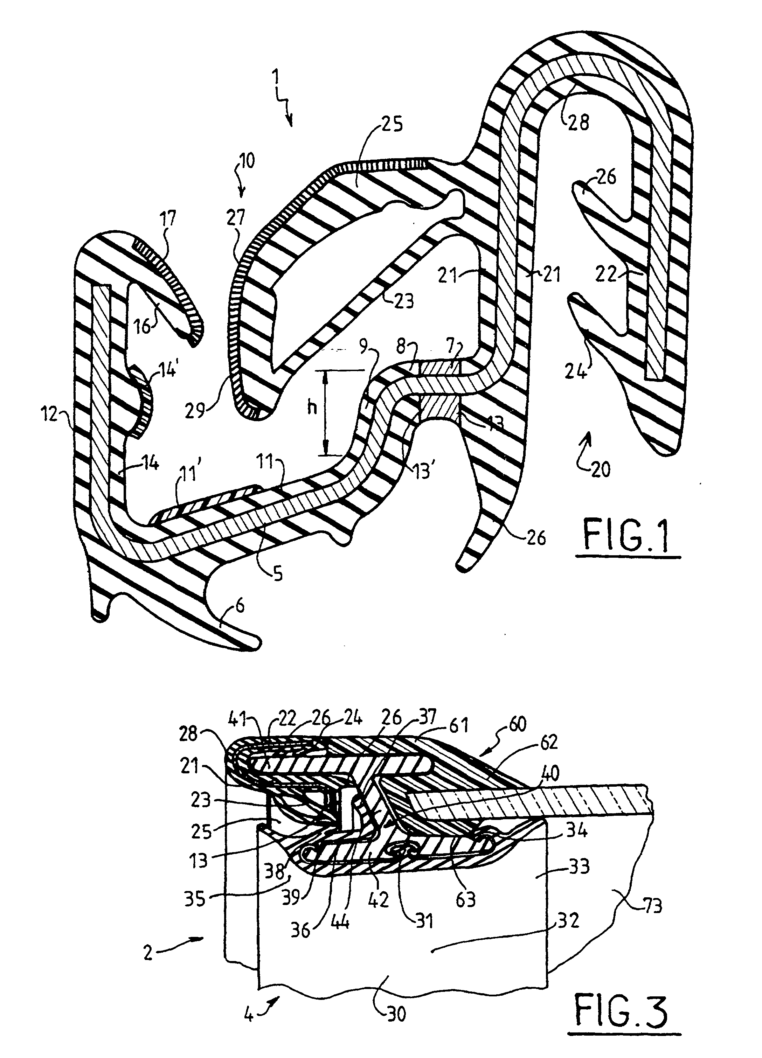

La coulisse extrudée, en EPDM ou en TPE, représentée à la Figure 1 présente une région 20 de montage sur un support tel qu'une feuillure faisant partie d'un cadre de porte de véhicule automobile, et une région d'étanchéité 10 qui ont l'un et l'autre la forme générale d'un U, les deux U étant disposés à l'inverse l'un de l'autre et présentant une branche commune 21.

La coulisse telle que représentée présente une armature 5 généralement en acier, en inox ou en aluminium, dont l'épaisseur est par exemple 0,8 mm et qui, comme représenté, intéresse l'ensemble du profil.

Cette armature 5 pourrait n'être disposée que sur une partie du profil, en l'occurrence la région 20, ou bien elle pourrait être totalement absente.

La région 20 comporte deux branches parallèles 21 et 22 reliées par une branche centrale 28. Deux lèvres souples 24 et 26 servent de manière classique à améliorer l'ancrage de la coulisse sur la feuillure du cadre de porte.

La région 10 comporte deux branches parallèles 14 et 21 qui portent des lèvres d'étanchéité respectivement 16 et 25, qui se font face et qui sont revêtues superficiellement d'un matériau à faible coefficient de frottement tel que par exemple du "flock" polyamide ou du vernis silicone réticulé en 17 et 27, pour permettre le coulissement d'une vitre mobile et pour améliorer l'étanchéité sonore. La lèvre principale 25 est préférentiellement pourvue d'une membrane 23 destinée à éviter les déversements ou les plis dans la zone où, comme on le verra par la suite, la coulisse doit être soumise à un cintrage. On notera également les lèvres d'étanchéité 6 et 26 portées par la face externe de la branche centrale 11 qui relie les branches parallèles 12 et 21 ainsi que les zones 11' et 14' sur la face interne des branches 11 et 14, qui sont revêtues de polyéthylène réticulé co-extrudé.

La branche 14 présente un bord externe d'habillage 12, qui est la face d'aspect extérieure de la coulisse montée sur le véhicule.

Afin de permettre la découpe dans la zone de découpe 7, et conserver à la région 10 après sciage une bonne rigidité (cas d'une coulisse armée), la branche centrale 11 présente une région 9 formant une marche de hauteur h qui se prolonge vers la branche 21 par un méplat 8 dans lequel est située ladite zone de découpe 7.

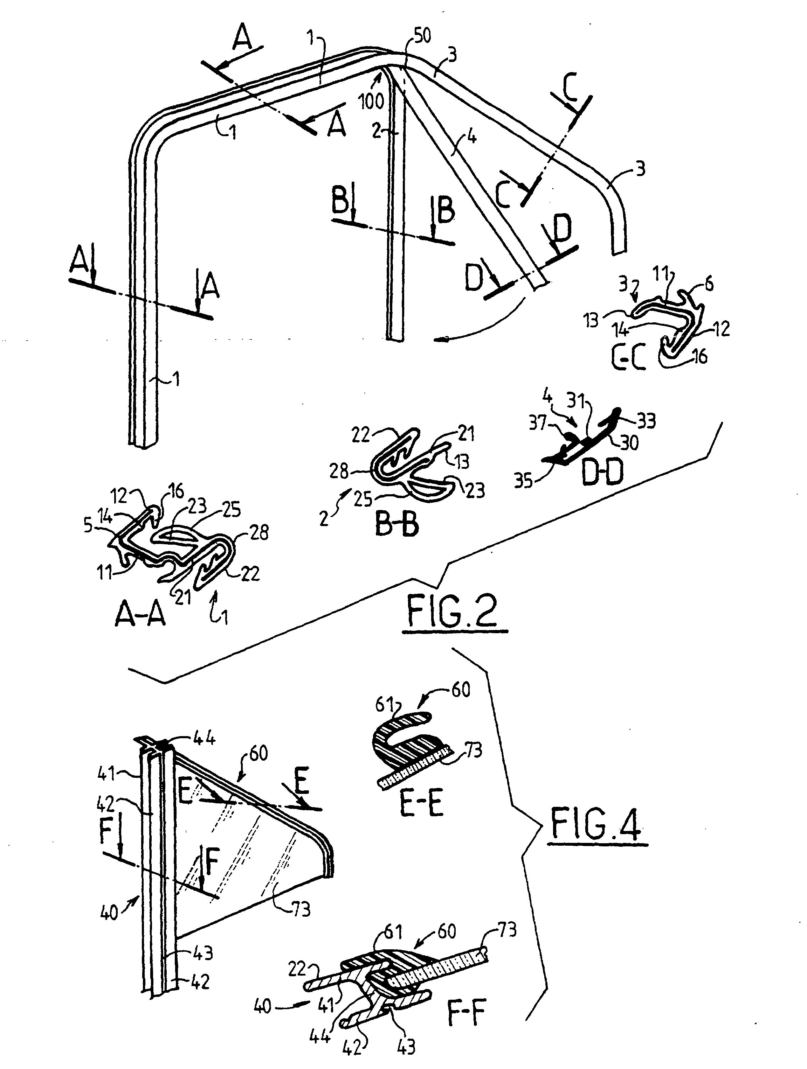

La coulisse est découpée longitudinalement sur une partie de sa longueur dans la zone de découpe 7 pour laisser subsister :
- un brin 1 qui est constitué par une longueur de coulisse non découpée (coupe AA de la Figure 2), qui s'étend jusqu'au point de séparation 100 où il se divise en :

- un brin 2 (demi-coulisse intérieure) qui est constitué par la région 20 jusqu'au trait de découpe 13 (coupe BB de la Figure 2),
- un brin 3 (demi-coulisse extérieure) qui est constitué par la région 10 jusqu'au trait de découpe 13' (coupe CC de la Figure 2), y compris donc la marche 9 éventuellement présente.

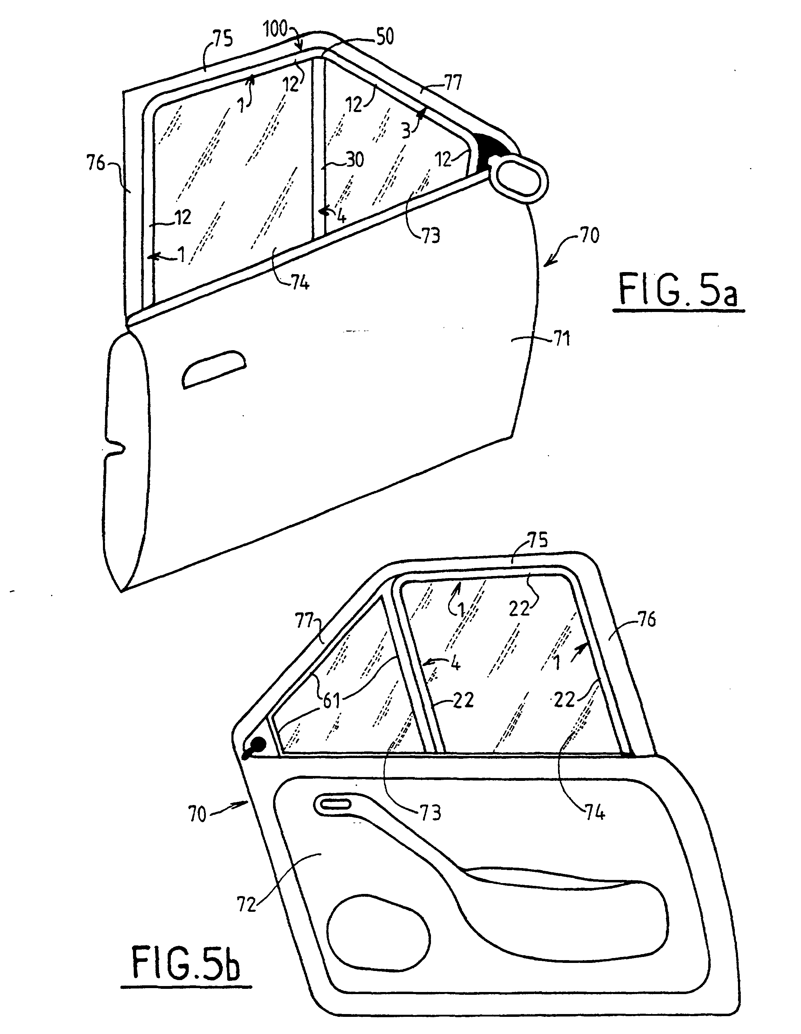

Le brin 1 est monté sur le cadre de porte (régions verticale 76 et horizontale 75 aux Figures 5a et 5b), alors que le brin 3 (demi-coulisse extérieure) file également le long de la région de custode 77 du cadre de porte, dans le prolongement de la région 75.

Le brin 2 (demi-coulisse intérieure) est cintré et/ou rayonné suivant un angle d'environ 90° en haut du dormant 40 (voir Figure 3) et descend le long de ce dernier. Dans le cas d'une coulisse armée, la zone de l'armature 5 correspondant à la branche centrale 28 est préférentiellement formée en demi-cercle comme représenté.

Comme le montrent plus particulièrement les Figures 3 et 4, le dormant 40 se présente comme un montant profilé en forme de H présentant deux branches principales parallèles 41 et 42 reliées par un pont 44.

La branche 42 est rainurée longitudinalement en 43 selon un profil complémentaire de celui d'une nervure 31 en forme de petit harpon qui court le long d'une région centrale 32 d'un profilé d'habillage 30 qui vient en appui le long de la branche 42, cet appui étant assuré par la coopération du harpon 31 et de la nervure 43. Ce profilé 30 permet un habillage propre du dormant 40 du côté extérieur du véhicule.

Le profilé 30 présente une région latérale 33 qui vient s'encliqueter en direction de la vitre de custode 73 grâce à une nervure 34 qui vient se loger en retour dans une rainure correspondante de la branche 42. A l'opposé, le profilé 30 présente une autre région latérale 34 qui vient se replier autour de l'autre extrémité de la branche 42 (voir la nervure 39 et la rainure correspondante de la face interne de la branche 42). La région latérale 34 se prolonge par deux régions planes 36 et 37 à 90° l'une de l'autre qui viennent longer le bord interne de la branche 42 et une partie du pont 44, jusqu'à venir en vis-à-vis de la lèvre 26 et du trait de découpe 13.

On notera également la lèvre 38 qui vient en vis-à-vis de la lèvre principale 25 pour jouer le rôle de la lèvre 16 et reconstituer l'étanchéité de la vitre mobile 74.

Le brin 2 est posé comme représenté autour d'une des extrémités de la branche principale 41 de manière que sa branche 21 vienne border l'intérieur de ladite extrémité de la branche principale 41 et que la lèvre 26 vienne porter contre le pont 44. L'extrémité de la branche 22 opposée à la branche centrale 28 vient porter contre une branche externe 61 d'un surmoulage 60 (en général appelé "encapsulation") qui emprisonne par ses branches 62 et 63 le verre de custode 73. L'extrémité de la branche 63 vient au voisinage de la nervure 34 du profilé d'habillage 30.

Les deux demi-coulisses (brin 2 et brin 3) qui lorsqu'elles sont armées peuvent être cintrées suivant des courbures différentes (cintrage différentiel) permettent d'assurer des fonctions différentes a priori contradictoires.

La demi-coulisse intérieure (brin 2) est cintrée/rayonnée suivant un angle de 90° environ en haut du dormant 40 et descend le long de ce dernier on a donc une bonne étanchéité acoustique du côté de l'intérieur du véhicule, puisqu'il y a continuité de la lèvre principale d'appui 25.

La demi-coulisse extérieure (brin 3) file le long du cadre serti de porte (76, 75, 77). Ceci permet une continuité de l'habillage du cadre de porte par le bord d'habillage 12 (voir Figure 5a).

Le profilé 30 qui constitue le profilé d'habillage 4 est préférentiellement moulé en 50 à la demi-coulisse extérieure (brin 3) sur la face externe d'habillage 12, de manière à parfaire l'habillage qui est alors réalisé sans discontinuité par le bord externe d'habillage 12 et par le profilé 30 (Figure 5a).

Côté interne, l'habillage est réalisé grâce à la continuité esthétique et acoustique de la branche 22 qui assure l'habillage inteme du cadre de porte et du dormant sur le pourtour (76, 75, 40) de la vitre mobile.

On notera également que la séparation en deux demi-coulisses facilite le cintrage en raison de la dissociation des fibres neutres des deux U 10 et 20. De ce fait, il apparaît possible de diminuer le rayon de cintrage par rapport au deuxième cas évoqué ci-dessus.

La présente invention s'applique à tous les cas d'ouvrants notamment automobiles pour lesquels il y a association d'une vitre mobile et d'une vitre fixe.

L'invention peut être mise en oeuvre sous la forme d'un ensemble ou "kit" comprenant :
- une coulisse avantageusement pré-découpée et pré-cintrée, telle que représentée à la Figure 2 ;
- une custode comprenant le dormant 40, la vitre fixe 73 et l'encapsulation 60 du dormant 40 et de la vitre 73 (Figure 4 et détails EE et FF).

## Revendications

1. Procédé de mise en place d'une coulisse, notamment d'une coulisse armée, sur une portière d'un véhicule automobile présentant un cadre de porte, ladite coulisse présentant une région de montage (20) sur un support tel qu'une feuillure et une région d'étanchéité (10) comportant au moins deux lèvres d'étanchéité opposées (16,25), la région de montage et la région d'étanchéité présentant une région de paroi commune (21) qui porte au moins une dite lèvre d'étanchéité (25), et la région d'étanchéité présentant une région de paroi externe (12) formant habillage externe de la coulisse, **caractérisé en ce que** la portière présente une vitre fixe (73), et une vitre mobile (74) séparées pas un dormant fixe (40), et **en ce qu'**il met en oeuvre :
- une séparation longitudinale de la coulisse sur une partie de sa longueur en un brin externe (3) qui présente au moins ladite région de paroi externe (12) et un brin interne (2) qui présente au moins ladite région de montage (20) et ladite lèvre d'étanchéité (25) portée par ladite paroi commune (21), de sorte que la coulisse présente une région non séparée où elle est constituée d'un brin principal (1) et, à partir d'un point de séparation (100), une région séparée dans laquelle le brin principal (1) est divisé selon une ligne de découpe longitudinale pour former le brin interne (2) et le brin externe (3);
- un montage du brin principal (1) sur le cadre de porte (75, 76) jusqu'à ce que le point de séparation (100) vienne au droit du dormant (40) ;
- un montage du brin externe (3) et du brin interne (2) respectivement sur le cadre de porte (77) au-delà dudit point de séparation (100), et le long du dormant (40).

2. Procédé selon la revendication 1, **caractérisé en ce que** la coulisse présente une armature (5) et **en ce qu'**il met en oeuvre un cintrage différentiel du brin externe (3) et du brin interne (2).

3. Procédé selon une des revendications 1 ou 2, **caractérisé en ce qu'**il met en oeuvre un habillage externe du dormant par un profilé d'habillage (4).

4. Procédé selon la revendication 3, **caractérisé en ce que** ledit profilé d'habillage (4) présente au moins une lèvre d'étanchéité (38) venant à l'opposé d'au moins une dite lèvre d'étanchéité (25) portée par la paroi commune (21) du brin interne (2).

5. Procédé selon une des revendications 3 ou 4, **caractérisé en ce que** ledit profilé d'habillage (4) est articulé (50) à ladite région de paroi externe (12).

6. Coulisse pour portière de véhicule présentant une région de montage (20) sur un support tel qu'une feuillure et une région d'étanchéité (10), comportant au moins deux lèvres d'étanchéité opposées (16,25), la région de montage et la région d'étanchéité présentant une région de paroi commune (21) qui porte au moins une dite lèvre d'étanchéité (25), et la région d'étanchéité présentant une région de paroi externe (12) formant habillage externe de la coulisse, **caractérisée en ce qu'**elle présente une région non séparée où elle est constituée d'un brin principal (1) et, à partir d'un point de séparation (100), une région séparée longitudinalement dans laquelle le brin principal est divisé selon une ligne de découpe longitudinale en un brin externe (3) qui présente au moins ladite région de paroi externe (12), et un brin interne (2) qui présente ladite région de montage (10) et ladite lèvre d'étanchéité (25) portée par ladite paroi commune (21).

7. Coulisse selon la revendication 6, **caractérisée en ce qu'**elle présente un profilé d'habillage externe (4) articulé à la région de paroi externe (12).

8. Coulisse selon la revendication 7, **caractérisée en ce que** ledit profilé d'habillage (4) présente au moins une lèvre d'étanchéité (38) venant, lorsque le profilé d'habillage (4) est parallèle au brin interne (2), à l'opposé d'une dite lèvre d'étanchéité (25) portée par la paroi commune (21).

9. Coulisse selon une des revendications 7 ou 8, **caractérisée en ce que** le profilé d'habillage (4) présente en coupe un profil en harpon (31) permettant un encliquetage dans une rainure complémentaire correspondante (43) du dormant (40).

10. Coulisse selon une des revendications 6 à 9, **caractérisée en ce qu'**elle comporte une armature (5).

11. Coulisse selon une des revendications 6 à 10, **caractérisée en ce qu'**en coupe elle présente un épaulement (9) situé au voisinage de la ligne de découpe longitudinale (13, 13').

12. Coulisse selon une des revendications 6 à 11, **caractérisée en ce qu'**elle est pré-cintrée en vue de son montage.

13. Ensemble pour le montage d'une coulisse sur une portière automobile, **caractérisé en ce qu'**il comporte une coulisse selon une des revendications 6 à 12, ainsi qu'une custode comprenant un dormant (40), une vitre fixe (73) et une encapsulation (60) du dormant (40) et de la vitre fixe (73).

## Patentansprüche

1. Verfahren zum Anbringen einer Gleitführung, insbesondere einer bewehrten Gleitführung an einer Tür eines Kraftfahrzeugs, die einen Türrahmen aufweist, wobei die Gleitführung einen Bereich (20) zur Montage an einer Stütze wie etwa einem Anschlag und einen Dichtungsbereich (10), der wenigstens zwei gegenüberliegende Dichtungslippen (16, 25) aufweist, umfasst, wobei der Montagebereich und der Dichtungsbereich eine gemeinsame Wandung (21) aufweisen, die wenigstens eine Dichtungslippe (25) trägt, und wobei der Dichtungsbereich einen äußeren Wandungsbereich (12) aufweist, der eine äußere Verkleidung der Gleitführung bildet, **dadurch gekennzeichnet, dass** die Tür eine festsitzende Glasscheibe (73) und eine bewegliche Glasscheibe (74) umfasst, die durch einen feststehenden Holm (40) getrennt sind, und dadurch, dass es Folgendes verwendet:
- eine Längsteilung der Gleitführung auf einem Teil seiner Länge in einen äußeren Strang (3), der wenigstens den äußeren Wandungsbereich (12) umfasst, und einen inneren Strang (2), der wenigstens den Montagebereich (20) und die Dichtungslippe (25) umfasst, die durch die gemeinsame Wandung (21) getragen wird, so dass die Gleitführung einen nicht geteilten Bereich aufweist, in dem sie aus einem Hauptstrang (1) gebildet ist und, ausgehend von einem Teilungspunkt (100), einen geteilten Bereich auf weist, in dem der Hauptstrang (1) entlang einer Längsschnittlinie geteilt ist, um den inneren Strang (2) und den externen Strang (3) zu bilden;
- ein Anbringen des Hauptstrangs (1) an dem Türrahmen (75, 76) bis der Teilungspunkt (100) über dem Holm (40) liegt;
- ein Anbringen des äußeren Strangs (3) und des inneren Strangs (2) ab dem Teilungspunkt (100) an dem Türrahmen (77) beziehungsweise entlang des Holms (40).

2. Verfahren nach Anspruch 1, **dadurch gekennzeichnet, dass** die Gleitführung eine Verstärkung (5) aufweist und dass der äußere Strang (3) und der innere Strang (2) unterschiedlich gebogen werden.

3. Verfahren nach einem der Ansprüche 1 oder 2, **dadurch gekennzeichnet, dass** ein Verkleidungsprofil (4) als eine äußere Verkleidung des Holms verwendet wird.

4. Verfahren nach Anspruch 3, **dadurch gekennzeichnet, dass** das Verkleidungsprofil (4) wenigstens eine Dichtungslippe (38) aufweist, die gegenüber von wenigstens einer Dichtungslippe (25) in Anlage kommt, welche durch die gemeinsame Wandung (21) des inneren Strangs (2) getragen wird.

5. Verfahren nach einem der Ansprüche 2 oder 4, **dadurch gekennzeichnet, dass** das Verkleidungsprofil (4) gelenkig (50) an dem äußeren Wandungsbereich (12) angebracht ist.

6. Gleitführung für eine Fahrzeugtür, die einen Bereich (20) zur Montage an einer Stütze wie etwa einem Anschlag und einen Dichtungsbereich (10), der wenigstens zwei gegenüberliegende Dichtungslippen (16, 25) aufweist, umfasst, wobei der Montagebereich und der Dichtungsbereich einen gemeinsamen Wandungsbereich (21) aufweisen, der wenigstens eine Dichtungslippe (25) trägt, und wobei der Dichtungsbereich einen äußeren Wandungsbereich (12) aufweist, der eine äußere Verkleidung der Gleitführung bildet, **dadurch gekennzeichnet, dass** sie einen nicht geteilten Bereich aufweist, in dem sie aus einem Hauptstrang (1) gebildet ist, und, ausgehend von einem Teilungspunkt (100), einen längs geteilten Bereich aufweist, in dem der Hauptstrang entlang einer Längsschnittlinie in einen äußeren Strang (3), die wenigstens den äußeren Wandungsbereich (12) aufweist, und einen inneren Strang (2) geteilt ist, der den Montagebereich (10) und die Dichtungslippe (25) umfasst, die von der gemeinsamen Wandung (21) getragen wird.

7. Gleitführung nach Anspruch 6, **dadurch gekennzeichnet, dass** sie ein äußeres Verkleidungsprofil (4) aufweist, das gelenkig an dem äußeren Wandungsbereich (12) angebracht ist.

8. Gleitführung nach Anspruch 7, **dadurch gekennzeichnet, dass** das Verkleidungsprofil (4) wenigstens eine Dichtungslippe (38) aufweist, die, wenn das Verkleidungsprofil (4) parallel zu dem inneren Strang (2) ist, gegenüber einer Dichtungslippe (25) in Anlage kommt, die von der gemeinsamen Wandung (21) getragen wird.

9. Gleitführung nach einem der Ansprüche 7 und 8, **dadurch gekennzeichnet, dass** das Verkleidungsprofil (4) im Schnitt das Profil (31) eines Gabelankers aufweist, das ein Verrasten in einer entsprechenden komplementären Nut (43) des Holms (40) ermöglicht.

10. Gleitführung nach einem der Ansprüche 6 bis 9, **dadurch gekennzeichnet, dass** sie eine Verstärkung (5) aufweist.

11. Gleitführung anch einem der Ansprüche 6 bis 10, **dadurch gekennzeichnet, dass** sie im Schnitt eine Schulter (9) aufweist, die in der Umgebung der Längsschnittlinie (13, 13') angeordnet ist.

12. Gleitführung nach einem der Ansprüche 6 bis 11, **dadurch gekennzeichnet, dass** sie zur Montage vorgebogen ist.

13. Baugruppe für die Montage einer Gleitführung an einer Fahrzeugtür, **dadurch gekennzeichnet, dass** sie eine Gleitführung gemäß einem der Ansprüche 6 bis 12 sowie ein Dreiecksfenster umfasst, das einen Holm (40), eine festsitzende Glasscheibe (73) und eine Verkapselung (60) des Holms (40) und der festsitzenden Glasscheibe (73) umfasst.

## Claims

1. Method for fitting a slideway, particularly a reinforced slideway, to a door of a motor vehicle exhibiting a doorframe, the said slideway exhibiting a region (20) for mounting on a support such as a rebate and a sealing region (10) comprising at least two opposed sealing lips (16, 25), the mounting region and the sealing region exhibiting a common wall region (21) which bears at least one said sealing lip (25), and the sealing region exhibiting an outer wall region (12) forming outer covering of the slideway, **characterized in that** the door has a fixed glass (73) and a moving glass (74) which are separated by a fixed post (40), and **in that** the said method involves:
- longitudinally separating the slideway, over part of its length, into an outer portion (3) which exhibits at least the said outer wall region (12), and an inner portion (2) which exhibits at least the said mounting region (20) and the said sealing lip (25) borne by the said common wall (21), so that the slideway exhibits an unseparated region in which it consists of a main portion (1) and, from a point (100) of separation onwards, a separate region in which the main portion (1) is split along a longitudinal cutting line to form the inner portion (2) and the outer portion (3);
- mounting the main portion (1) on the doorframe (75, 76) up to the point where the point (100) of separation comes into line with the post (40) ;
- mounting the outer portion (3) and the inner portion (2) on the doorframe (77) beyond the said point (100) of separation and along the post (40), respectively.

2. Method according to Claim 1, **characterized in that** the slideway exhibits a reinforcement (5) and **in that** differential bending of the outer portion (3) and of the inner portion (2) is involved.

3. Method according to either of Claims 1 and 2, **characterized in that** the post is covered on the outside with a cover strip (4).

4. Method according to Claim 3, **characterized in that** the said cover strip (4) exhibits at least one sealing lip (38) which comes to lie opposite the at least one said sealing lip (25) borne by the common wall (21) of the inner portion (2).

5. Method according to either of Claims 3 and 4, **characterized in that** the said cover strip (4) is articulated (50) to the said outer wall region (12).

6. Slideway for a vehicle door, exhibiting a region (20) for mounting on a support such as a rebate and a sealing region (10) comprising at least two opposed sealing lips (16, 25), the mounting region and the sealing region exhibiting a common wall region (21) which bears at least one said sealing lip (25), and the sealing region exhibiting an outer wall region forming outer covering of the slideway, **characterized in that** it exhibits an unseparated region in which it consists of a main portion (1) and, from a point (100) of separation onwards, a longitudinally separated region in which the main portion is split along a longitudinal cutting line into an outer portion (3) which exhibits at least the said outer wall region (12), and an inner portion (2) which exhibits the said mounting region (10) and the said sealing lip (25) borne by the said common wall (21).

7. Slideway according to Claim 6, **characterized in that** it has an outer cover strip (4) articulated to the outer wall region (12).

8. Slideway according to Claim 7, **characterized in that** the said cover strip (4) exhibits at least one sealing lip (38) which, when the cover strip (4) is that the said cover strip (4) exhibits at least one sealing lip (38) which, when the cover strip (4) is parallel to the inner portion (2), comes to lie opposite one said sealing lip (25) borne by the common wall (21).

9. Slideway according to either of Claims 7 and 8, **characterized in that** the cover strip (4) in cross section is shaped as a barbed hook (31), allowing it to be snap-fastened into a corresponding complementary groove (43) in the post (40).

10. Slideway according to one of Claims 6 to 9, **characterized in that** it comprises a reinforcement (5).

11. Slideway according one of Claims 6 to 10, **characterized in that**, in cross section, it has a shoulder (9) located near to the longitudinal cutting line (13, 13').

12. Slideway according to one of Claims 6 to 11, **characterized in that** it is pre-bent with a view to mounting it.

13. Assembly for mounting a slideway on a motor vehicle door, **characterized in that** it comprises a slideway according to one of Claims 6 to 12, and a quarter light comprising a post (40), a fixed glass (73) and an encapsulation (60) of the post (40) and of the fixed glass (73).
